(19) **Europäisches Patentamt**
**European Patent Office**
**Office européen des brevets**

(11) Veröffentlichungsnummer: **0 342 506**
**A1**

(12) **EUROPÄISCHE PATENTANMELDUNG**

(21) Anmeldenummer: 89108410.5

(22) Anmeldetag: 10.05.89

(51) Int. Cl.⁴: **C22C 19/07 , C22C 38/10 ,**
**C22C 38/14 , B23K 35/02 ,**
**B23K 35/14 , B23K 35/24**

(30) Priorität: 20.05.88 CH 1944/88

(43) Veröffentlichungstag der Anmeldung:
23.11.89 Patentblatt 89/47

(84) Benannte Vertragsstaaten:
AT CH DE FR GB IT LI

(71) Anmelder: **LONZA AG**
**Gampel/Wallis Geschäftsleitung Basel**
**CH-4002 Basel(CH)**

(72) Erfinder: **Gampp, Kurt, Dr.**
**Hofmattweg 51**
**CH-Arlesheim (Kanton Baselland)(CH)**
Erfinder: **Heinzen, Georg**
**Gartenstrasse 59**
**CH-Muttenz (Kanton Baselland)(CH)**

(74) Vertreter: **von Füner, Alexander, Dr. et al**
**Patentanwälte v. Füner, Ebbinghaus, Finck**
**Mariahilfplatz 2 & 3**
**D-8000 München 90(DE)**

(54) Amorphe oder teilamorphe Metall-Legierung.

(57) Es werden amorphe bzw. teilamorphe Kobalt-Eisen-Zirkonlegierungen beschrieben, die in Form von Lötfolien zum Hartlöten von verschiedenen Werkstoffen wie Keramik, Metall oder Graphit eingesetzt werden können.

EP 0 342 506 A1

EP 0 342 506 A1

## Amorphe oder teilamorphe Metall-Legierung

Die Erfindung betrifft eine neue amorphe oder teilamorphe Kobalt-Eisen-Zirkonlegierung, insbesondere in der Form einer Lötfolie, zum Hartlöten von Keramik mit Keramik, Keramik mit Metall, Metallen untereinander, Graphitteilen untereinander, Graphitteilen mit Keramik oder Graphitteilen mit Metallen.

Für Hochtemperaturanwendungen von Metallen bei Keramik oder auch bei Graphit ist das Hartlöten ein Fügeverfahren mit zunehmender Bedeutung. Der Begriff Hartlöten kann auch durch den Begriff Aktivlöten erklärt werden (Praktische Metallographie, Sonderbände, Stuttgart, 18, 1987).

Es kommt vorteilhaft zur Anwendung bei Sondermetallen, z.B. Titan, wo beim Schweissen an den Uebergangsbereichen ein Kornwachstum stattfindet und zur Versprödung führt. Dies kann mit geeigneten Lotlegierungen vermieden werden, da ihr Schmelzpunkt unterhalb der Gefügeänderung des Sondermetalls liegt. Das Hartlöten wird ebenfalls mit Erfolg eingesetzt bei Metallen, Keramik, gefügten Teilen aus Metall und Keramik, Graphit oder gefügten Teilen aus Graphit mit Keramik oder mit Metallen, sofern sie für einen Einsatz bei höheren Temperaturen vorgesehen sind.

Die gefügten Werkstoffe haben den Vorteil, dass Grundwerkstoffe mit unterschiedlichen Eigenschaften kombiniert werden können. Der Zweck des Fügens von Metall mit Keramik kann beispielsweise ein Verschleissschutz, eine Wärmedämmung, ein Korrosionsschutz, eine elektrische Isolation, eine vakuumdichte Durchführung oder dergleichen sein. Die Fügetechnik durch Hartlöten ist auch für die Verbindung von Keramikteilen, gleicher oder verschiedener chemischer Zusammensetzung, von Bedeutung; insbesondere, wenn komplizierte Körper aus einfach geformten Teilen zusammengefügt werden sollen.

Besonders wichtig für eine dauerhafte Verbindung der Teile ist, dass diese Teile vom Lot gut benetzt werden.

Biegsame Folien sind vielfach einfacher zu handhaben und besser zu dosieren als Pulver oder Pasten.

Wegen ihrer hohen Duktilität eignen sich für das Hartlöten besonders amorphe oder teilamorphe Folien, die durch rasches Abschrecken aus der Schmelze erhalten werden.

Diese Folien bestehen aus nur einer, aber sehr homogenen Schicht.

Für eine gute Benetzung ist notwendig, dass jede oxidische Verunreinigung an der Oberfläche der Lötmittel vermieden wird, daher wird das Hartlöten mit den erwähnten Folien vorzugsweise im Vakuum oder unter Schutzgas ausgeführt.

Aufgabe der vorliegenden Erfindung ist es, eine neue amorphe oder teilamorphe Kobalt-Eisen-Zirkon-Legierung bereitzustellen, die in Form einer Lötfolie in besonderer Weise als Hartlötverbindung verschiedener Werkstoffe einsetzbar ist. Diese Aufgabe wird wie im folgenden beschrieben gelöst.

Die Kobalt-Eisen-Zirkon-Legierung hat erfindungsgemäss eine Zusammensetzung von 30 bis 60 Atom% Kobalt, 30 bis 60 Atom% Eisen und 10 bis 40 Atom% Zirkon.

Vorteilhaft gelangen Legierungen mit Zusammensetzungen von 35 bis 55 Atom% Kobalt, 35 bis 50 Atom% Eisen und 25 bis 35 Atom% Zirkon zum Einsatz.

Besonders bevorzugte Legierungen sind $Co_{40}Fe_{40}Zr_{20}$ und $Co_{35}Fe_{35}Zr_{30}$.

Wichtige Voraussetzung ist, dass die verwendeten Legierungsbestandteile Kobalt, Eisen und Zirkon für die Herstellung der amorphen bzw. teilamorphen Legierungen eine Reinheit von mindestens 99,5% aufweisen. Ausserdem dürfen keine oxidischen Verunreinigungen vorhanden sein.

Die Herstellung der erfindungsgemässen amorphen bzw. teilamorphen Legierungen erfolgt durch Abschrecken der Schmelze der genannten Legierung mit einer Kühlrate von mindestens $10^5$ °C/s. Dabei handels es sich um Techniken, die in der Herstellung von glasartigen Metallen bekannt und verbreitet sind.

Die amorphen bzw. teilamorphen Legierungen können danach in Form von Pulvern, Bändern, Drähten oder Folien erhalten werden.

Zur Herstellung der erfindungsgemässen Lötfolien wird zweckmässig das Schmelzspinnverfahren herangezogen, wo das schmelzflüssige Metall auf einem schnell rotierenden Kupferzylinder abgeschreckt und als Band oder Folie abgezogen wird.

Unter diesen Bedingungen hergestellte Folien weisen amorphe oder teilamorphe Struktur und eine hohe Duktilität auf und sind in hohem Masse homogen.

Die Kobalt-Eisen-Zirkon-Legierungen der vorliegenden Erfindung müssen, um dem Einsatz als Lötfolie zu genügen, mindestens teilweise amorph sein.

Die Dicke der erfindungsgemässen Kobalt-Eisen-Zirkon-Folien beträgt üblicherweise zwischen 20 und 120 $\mu$m, vorzugsweise zwischen 40 und 90 $\mu$m.

Da die Löttemperaturen für diese Legierungen in einem Bereich von 900 bis 1300 °C liegen, sind die entsprechenden Lötfolien in besonderer Weise zum Hartlöten von Keramikteilen untereinander, Keramikteilen mit Metallen, Metallen untereinander, Graphitteilen untereinander, Graphitteilen mit Keramik oder

2

Graphitteilen mit Metallen geeignet.

Als Keramiken sind solche aus Aluminiumoxiden, Zirkonoxiden, Magnesiumoxiden oder Siliciumcarbiden bzw. deren Mischungen einsetzbar. Die erfindungsgemässe Lötfolie eignet sich besonders zum Verbinden von Keramikteilen aus Siliciumcarbid.

Vorteilhaft zu verbindende Metalle sind Titan, Zirkonium, Hafnium, Eisen, Nickel bzw. deren Legierungen.

Zweckmässig werden die Lötfolien ebenfalls zum Verbinden von Keramikteilen aus Aluminiumoxiden, Zirkonoxiden, Magnesiumoxiden oder Siliciumcarbiden mit Metallteilen aus Titan, Zirkonium, Hafnium, Eisen, Nickel bzw. deren Legierungen eingesetzt. Bevorzugte Keramik-Metallverbindungen bestehen aus Aluminiumoxid mit Nickel oder Eisen (Stahl).

Ausserdem wird die erfindungsgemässe Lötfolie erfolgreich für Hartlötverbindungen von Graphitteilen untereinander oder Graphit mit den genannten Keramiken oder Metallen eingesetzt.


Beispiele

Durch Aufbringen einer Metallschmelze (Zusammensetzung in folgenden Beispielen angegeben) auf eine mit einer Umdrehungsgeschwindigkeit von 30 m/s sich bewegenden Kupfertrommel, unter Helium als Schutzgas und einem Unterdruck von ca. 0,8 bar, wurden amorphe Bänder mit einer Dicke von 80 $\mu$m und einer Breite von 20 mm hergestellt.

Die folgende Tabelle zeigt die Zusammensetzung von erfindungsgemässen amorphen Metallen in Form von Lötfolien.

| Beispiel | Co Atom% | Fe Atom% | Zr Atom% |
|----------|----------|----------|----------|
| 1 | 40 | 40 | 20 |
| 2 | 35 | 35 | 30 |


Beispiel 3

Die zu verbindenden Oberflächen eines SiC-Plättchens der Masse 10 x 10 x 5 mm und eine zylinderförmige Stahlwelle mit einer Länge von 60 mm und einem Durchmesser von 40 mm wurden entfettet und gesäubert. Zwischen die Oberflächen wurde eine 60 $\mu$m dicke $Co_{35}Fe_{35}Zr_{30}$-Lötfolie eingefügt. Die Lötung wurde erzielt in einem induktiv beheizten Hochvakuumofen bei einem Druck von $10^{-5}$ mbar und bei einer Temperatur von 1'250° C während 10 Minuten. Die Lötverbindung erwies sich als äusserst widerstandsfähig.


**Ansprüche**

1. Amorphe oder teilamorphe Metall-Legierungen, gekennzeichnet durch die Zusammensetzung 30 bis 60 Atom% Kobalt, 30 bis 60 Atom% Eisen, 10 bis 40 Atom% Zirkon.

2. Legierung nach Anspruch 1, gekennzeichnet durch die Zusammensetzung 35 bis 55 Atom% Kobalt, 35 bis 50 Atom% Eisen, 25 bis 35 Atom% Zirkon.

3. Lötfolie mit einer Legierungszusammensetzung von 30 bis 60 Atom% Kobalt, 30 bis 60 Atom% Eisen, 10 bis 40 Atom% Zirkon.

4. Lötfolie nach Patentanspruch 3, dadurch gekennzeichnet, dass sie eine Dicke von 20 bis 120 $\mu$m aufweist.

5. Verwendung einer Lötfolie nach Patentanspruch 3 oder 4 zum Hartlöten von Keramikteilen untereinander, Keramikteilen mit Metallen, Metallen untereinander, Graphitteilen untereinander, Graphitteilen mit Keramik oder Graphitteilen mit Metallen.

6. Verwendung nach Patentanspruch 5 zum Hartlöten von Keramikteilen aus Aluminiumoxiden, Zirkonoxiden, Magnesiumoxiden, Siliciumcarbiden oder deren Mischungen.

7. Verwendung nach Patentanspruch 5 zum Hartlöten von Keramikteilen aus Aluminiumoxiden, Zirkonoxiden, Magnesiumoxiden, Siliciumcarbiden mit Metallteilen aus Titan, Zirkonium, Hafnium, Nickel, Eisen oder deren Legierungen.

8. Verwendung nach Patentanspruch 5 zum Hartlöten von Graphitteilen mit Keramikteilen aus Aluminiumoxiden, Magnesiumoxiden, Zirkoniumoxiden oder Siliciumcarbiden.

9. Verwendung nach Patentanspruch 5 zum Hartlöten von Graphitteilen mit Metallteilen aus Titan, Eisen, Nickel, Zirkonium.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP - A1 - 0 038 584 <br> (BBC) <br> * Zusammenfassung; Seite 2, Zeilen 24-27; Seite 3, Zeilen 5-14; Seite 9, Zeilen 10,15; Seite 10, Zeilen 24-31 * <br> -- | 1-7 | C 22 C 19/07 <br> C 22 C 38/10 <br> C 22 C 38/14 <br> B 23 K 35/02 <br> B 23 K 35/14 <br> B 23 K 35/24 |
| A | EP - A1 - 0 020 965 <br> (ALLIED CHEMICAL CORPORATION) <br> * Seite 3, Zeilen 10-16; Seite 3, Zeile 35 - Seite 4, Zeile 3 * <br> -- | 1-5 | |
| A | US - A - 4 448 605 <br> (MIZUHARA) <br> * Spalte 1, Zeilen 17-23, 35-40 * <br> -- | 1,5,7 | |
| A | US - A - 3 079 251 <br> (DONNELLY) <br> * Spalte 1, Zeilen 10-18 * <br> ---- | 5,8,9 | RECHERCHIERTE SACHGEBIETE (Int. Cl.4) <br><br> C 22 C 19/00 <br> C 22 C 38/00 <br> B 23 K 35/00 |

Der vorliegende Recherchenbericht wurde für alle Patentansprüche erstellt.

| Recherchenort | Abschlußdatum der Recherche | Prüfer |
|---|---|---|
| WIEN | 24-07-1989 | ONDER |